# EUROPEAN PATENT APPLICATION

(11) **EP 4 276 631 A1**
(43) Date of publication of application: **15.11.2023**
(21) Application number: 23172313.1
(22) Date of filing: 09.05.2023
(51) Int. Cl.: G06F 11/36, B60W 50/04

(54) **METHOD AND COMPUTER SYSTEM FOR OPTIMIZING ALGORITHM MODEL TO BE VERIFIED, AND MEDIUM**

(30) Priority: 11.05.2022 CN 202210508843
(71) Applicant: Anhui NIO Autonomous Driving Technology Co., Ltd., Hefei, Anhui 230601 (CN)
(72) Inventor: CHEN, Ziwei, Hefei, Anhui Province, 230601 (CN); SHE, Xiaoli, Hefei, Anhui Province, 230601 (CN); REN, Shaoqing, Hefei, Anhui Province, 230601 (CN)
(74) Representative: Vossius & Partner Patentanwälte Rechtsanwälte mbB

(57) **Abstract**

The disclosure relates to a method, a computer system and a computer storage medium for optimizing an algorithm model to be verified. The method includes: packaging the algorithm model to be verified into a shadow file; generating a shadow filter, wherein the shadow filter is capable of capturing a shadow feature value output by the shadow file; combining the shadow file and the shadow filter into a shadow task, and distributing the shadow task to a matching vehicle, wherein the vehicle is equipped with a function task, and the function task is formed by combining a function file and a function filter, wherein the function filter is capable of capturing a function feature value output by the function file; capturing the shadow feature value output by the shadow file and capturing the function feature value output by the function file; and comparing the captured shadow feature value and the captured function feature value, and evaluating and/or optimizing, at least based on a result of the comparison, the algorithm model to be verified. The disclosure verifies, in a real road scenario, the algorithm model to be verified, improving the verification effect of the algorithm model to be verified.

## Description

### Technical Field

The disclosure relates to the field of vehicles, and in particular, to a method, a computer system and a computer storage medium for optimizing an algorithm model to be verified.

### Background Art

Automatic driving is highly dependent on artificial intelligence technologies, and a vehicle often needs to utilize a plurality of algorithm models to perform a plurality of sub-functions of an automatic driving system. Due to the complexity of the automatic driving system and changing application scenarios, the algorithm model usually needs to be tested and verified repeatedly before it is actually applied to the automatic driving system, to ensure the safety and reliability of the algorithm model in application. In addition, various function iterations of automatic driving rely on new algorithm models that are constantly evolving and optimizing. In order to improve the user experience and service efficiency of automatic driving, the technologies and functions of the automatic driving system need to be continuously updated and upgraded iteratively. Therefore, in the application field of the automatic driving system, there is a large demand for verifying and optimizing new algorithm models.

However, currently, new algorithm models are usually verified offline through simulation schemes based on historical data, which has limitations. In addition, using dedicated test roads to test the algorithm model to be verified may have a problem of limited roads and test vehicles available for testing, which cannot meet service requirements.

### Summary of the Invention

In order to solve or at least alleviate one or more of the above problems, the following technical solutions are provided.

According to a first aspect of the disclosure, there is provided a method for optimizing an algorithm model to be verified, the method including: packaging the algorithm model to be verified into a shadow file; generating a shadow filter corresponding to the shadow file, wherein the shadow filter is capable of capturing a shadow feature value output by the shadow file; combining the shadow file and the shadow filter into a shadow task, and distributing the shadow task to a matching vehicle, wherein the vehicle is equipped with a function task, and the function task is formed by combining a function file and a corresponding function filter, wherein the function filter is capable of capturing a function feature value output by the function file; during the operation of the shadow file and the function file, capturing, by the shadow filter, the shadow feature value output by the shadow file, and capturing, by the function filter, the function feature value output by the function file; and comparing the captured shadow feature value and the corresponding function feature value, and evaluating and/or optimizing, at least based on a result of the comparison, the algorithm model to be verified.

According to one or more embodiments of the first aspect of the disclosure, optionally, the method further includes: if the algorithm model to be verified is optimized by the algorithm model optimization step, repackaging the optimized algorithm model to be verified into the shadow file for re-distributing to the matching vehicle, so that the optimized algorithm model to be verified can be iteratively optimized.

According to one or more embodiments of the first aspect of the disclosure, optionally, during the operation of the shadow file and the function file, the shadow file is isolated from the function file, and communicates with processes in the vehicle other than the shadow file through a proxy.

According to one or more embodiments of the first aspect of the disclosure, optionally, the shadow file communicates with other processes in the vehicle through the proxy in the following manner: the shadow file can only receive messages forwarded by a gateway, and the shadow feature value output by the shadow file can only be broadcast through the gateway.

According to one or more embodiments of the first aspect of the disclosure, optionally, the shadow filter captures, according to corresponding shadow filter rules, the shadow feature value output by the shadow file, wherein the shadow filter, the shadow filter rules, and the shadow file are named in a matching way, forming a constraint relationship among the shadow filter, the shadow filter rules and the shadow file.

According to a second aspect of the disclosure, there is provided a computer system for optimizing an algorithm model to be verified, the computer system including: a memory; a processor; and a computer program stored on the memory and executable on the processor, wherein the execution of the computer program causes the following steps to be performed: packaging the algorithm model to be verified into a shadow file; generating a shadow filter corresponding to the shadow file, wherein the shadow filter is capable of capturing a shadow feature value output by the shadow file; combining the shadow file and the shadow filter into a shadow task, and distributing the shadow task to a matching vehicle, wherein the vehicle is equipped with a function task, and the function task is formed by combining a function file and a corresponding function filter, wherein the function filter is capable of capturing a function feature value output by the function file; during the operation of the shadow file and the function file, capturing, by the shadow filter, the shadow feature value output by the shadow file, and capturing, by the function filter, the function feature value output by the function file; and comparing the captured shadow feature value and the corresponding function feature value, and evaluating and/or optimizing, at least based on a result of the comparison, the algorithm model to be verified.

According to one or more embodiments of the second aspect of the disclosure, optionally, the execution of the computer program further causes the following step to be performed: if the algorithm model to be verified is optimized by the algorithm model optimization step, repackaging the optimized algorithm model to be verified into the shadow file for re-distributing to the matching vehicle, so that the optimized algorithm model to be verified can be iteratively optimized.

According to one or more embodiments of the second aspect of the disclosure, optionally, during the operation of the shadow file and the function file, the shadow file is isolated from the function file, and communicates with processes in the vehicle other than the shadow file through a proxy.

According to one or more embodiments of the second aspect of the disclosure, optionally, the shadow file communicates with other processes in the vehicle through the proxy in the following manner: the shadow file can only receive messages forwarded by a gateway, and the shadow feature value output by the shadow file can only be broadcast through the gateway.

According to one or more embodiments of the second aspect of the disclosure, optionally, the shadow filter captures, according to corresponding shadow filter rules, the shadow feature value output by the shadow file, wherein the shadow filter, the shadow filter rules, and the shadow file are named in a matching way, forming a constraint relationship among the shadow filter, the shadow filter rules and the shadow file.

According to a third aspect of the disclosure, there is provided a computer storage medium comprising instructions, where the instructions, when executed, cause the method for optimizing an algorithm model to be verified according to the first aspect of the disclosure to be performed.

According to one or more embodiments of the disclosure, the vehicle-based method and computer system for optimizing an algorithm model to be verified meet the service requirements of using a real-time real road scenario to verify and test the algorithm model to be verified. The algorithm model to be verified is distributed to the vehicle end through the cloud, so that the algorithm model to be verified operates simultaneously with the existing functional algorithm model on the vehicle end. In order to ensure the smooth operation of the existing functional algorithm models on the vehicle end, during the actual operation of the algorithm model to be verified and the functional algorithm model on the vehicle, the output of the operation results of the algorithm model to be tested does not affect the existing functional logic. In addition, by collecting and analyzing corresponding feature results output from the algorithm model to be verified and the functional algorithm model, the method and the computer system of the disclosure can evaluate and optimize the algorithm model to be verified. Therefore, the method and the computer system for optimizing the algorithm model to be verified according to the disclosure verifies, in a real road scenario, the algorithm model to be verified, without affecting the function of the existing functional algorithm model of the vehicle, which significantly improves the verification validity and reliability of the algorithm model to be verified.

### Brief Description of the Drawings

The above and other objectives and advantages of the disclosure will be more thorough and clearer from the following detailed description in conjunction with the drawings, where the same or similar elements are represented by the same reference numerals.
FIG. 1 is a flowchart of a method for optimizing an algorithm model to be verified according to one or more embodiments of the disclosure; and
FIG. 2 is a block diagram of a computer system for optimizing an algorithm model to be verified according to one or more embodiments of the disclosure.

### Detailed Description of Embodiments

A vehicle-based system and method for optimizing an algorithm model to be verified involved in the disclosure will be described in further detail below with reference to the accompanying drawings. It should be noted that the following detailed description of embodiments is exemplary rather than limiting, and is intended to provide a basic understanding of the disclosure, and is not intended to confirm key or decisive elements of the disclosure or limit the scope of protection.

The disclosure is described below with reference to the block diagram descriptions, the block diagrams, and/or the flowcharts of the systems and methods in the embodiments of the disclosure. It will be understood that each block of these flowchart descriptions and/or the block diagrams, and combinations of the flowchart descriptions and/or the block diagrams, can be implemented by computer program instructions. These computer program instructions may be provided for a processor of a general-purpose computer, a dedicated computer, or a further programmable data processing device to generate a machine, so that the instructions executed by the processor of the computer or the further programmable data processing device create components for implementing the functions/operations specified in these flowcharts and/or blocks and/or one or more flow block diagrams.

These computer program instructions may be stored in a computer-readable memory, and the instructions can instruct a computer or another programmable processor to implement the functions in a specific manner, so that the instructions stored in the computer-readable memory generate a manufactured product containing instruction components that implement the functions/operations specified in one or more blocks of the flowcharts and/or the block diagrams.

These computer program instructions may be loaded onto the computer or another programmable data processor, so that a series of operations and steps are performed on the computer or another programmable processor, to generate a computer-implemented process, so that the instructions executed on the computer or another programmable data processor provide steps for implementing the functions or operations specified in one or more blocks in the flowcharts and/or block diagrams. It should also be noted that in some alternative implementations, the functions/operations shown in the blocks may not occur in the order shown in the flowcharts. For example, two blocks shown in sequence may actually be executed substantially simultaneously or the blocks may sometimes be executed in a reverse order, depending on the functions/operations involved.

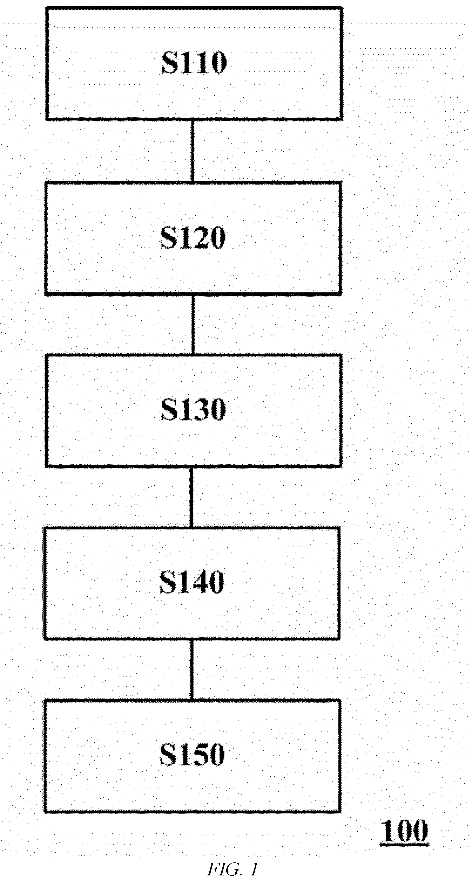

A method 100 for optimizing an algorithm model to be verified according to an implementation of the disclosure will be described below in conjunction with FIG. 1. Based on service requirements of automatic driving, a plurality of algorithm models are newly designed, each of which is capable of performing a corresponding service function on a vehicle. In order to verify and optimize the functionality of the newly designed algorithm model, the method 100 for optimizing an algorithm model to be verified according to the disclosure can distribute the algorithm model to be verified to the vehicle end, to verify and optimize, based on the actual driving scenario of the vehicle, the algorithm model to be verified.

FIG. 1 is a flowchart of a method 100 for optimizing an algorithm model to be verified according to one or more embodiments of the disclosure. In an embodiment of the disclosure, the method 100 includes step S 110, step S120, step S130, step S 140 and step S150.

In step S 110, the algorithm model to be verified can be packaged into a shadow file. It should be noted that the shadow file is a file package formed by combining algorithm models to be verified, where the combination of shadow files may contain a main algorithm model to be verified, as well as an adapted file package and an adapter. In some embodiments, one or more algorithm models to be verified (e.g., any number of 1 algorithm model to be verified to 10 algorithm models to be verified) can be packaged into the shadow file. Management for the shadow file can include: creating a file package, where a corresponding file name and a bound whole vehicle version are first declared and a base increment identifier is generated. For example, in some embodiments, the file name of the shadow file is a, b, c, d, and the cloud can specify, through the file name (coapp_name) of the shadow file, the algorithm model to be verified to which the shadow file is primarily adapted.

In step S120, shadow filter rules corresponding to the shadow file can be designed, and a shadow filter is generated based on the shadow filter rules. It should be noted that the shadow filter rules are a combination of rules that perform feature filtering on the results output by the algorithm model to be verified. By configuring a combination of such rules, the shadow feature value output by the algorithm model can be captured, and when the specified rules are triggered, the data content to be captured can be captured at the vehicle end. The shadow filter is responsible for parsing the corresponding shadow filter rules at the vehicle end, so as to capture the shadow feature value output by the algorithm model to be verified of the shadow file according to the shadow filter rules, and trigger data upload according to the parsed shadow filter rules.

The shadow filter rules needs to be bound to a corresponding type of shadow file. In order to ensure a constraint relationship between the shadow filter rules and the shadow file, the cloud can use the rule name (rule name) of the shadow filter rules to specify the shadow feature value that is to be captured and that is output by the algorithm model to be verified, that is, the shadow filter rules and the shadow filter are named to match the shadow file respectively. In an embodiment of the disclosure, the shadow file, the shadow filter rules, and the shadow filter are named according to the following rules: corresponding to shadow files a, b, c, and d, shadow filters are named selectA_a, selectB_a, selectC b, and selectD_b, where A, B, C, and D correspond to the matching shadow filter rules respectively. That is, the shadow filters selectA_a, selectB_a, selectC b, and selectD_b can capture the shadow feature values output by the corresponding shadow files a, b, c, d according to the corresponding shadow filter rules A, B, C, and D, for evaluating the corresponding algorithm model to be verified. The constraint relationship achieved through naming rules not only reduces the management cost of adapting the shadow filter rules to shadow file versions, but also ensures that a type of shadow filter rule matches a type of shadow file.

In step S130, the shadow file and the selected corresponding shadow filter can be combined to form a shadow task, and the shadow task is distributed to a matching vehicle. In some embodiments, the number of vehicles matched with the distributed shadow task can be selected based on the verification requirements (e.g., mileage requirements) of the algorithm model to be verified. It can be understood that the more vehicles are distributed, the richer the verification data obtained by the method 100, and the more beneficial to verify the model accurately. However, the larger volume of data will also increase the amount of analysis, which is not conducive to the efficiency of verifying the model.

In some embodiments, the shadow task can be distributed to the vehicle end by the following steps: first, a shadow task for distributing is created; next, a corresponding shadow file and a whole vehicle software version are selected based on the created shadow task; then, a shadow filter belonging to the same shadow file and the same whole vehicle software version is selected; subsequently, a corresponding group of vehicles with the same whole vehicle software version is filtered by default based on the whole vehicle software version identified in the above steps; then, the shadow task is decomposed into a plurality of tasks for distributing (e.g., into n filters for distributing and 1 file for distributing); finally, after confirming that the whole vehicle software version installed in the vehicle to be distributed matches the identified whole vehicle software version, the task is distributed to the corresponding vehicle end. The above process of distributing the shadow task to the vehicle end not only ensures the constraint relationship of the corresponding whole vehicle software version, but also ensures the constraint relationship between the shadow filter and the shadow file.

The vehicle end to which the shadow task is distributed is now described. In the vehicles to which the shadow task is distributed, a function task is already installed to implement the functionality of the functional domain. The function task is formed by combining function files and corresponding function filters. The function file can be packaged and generated by a functional algorithm model, and the functional filter can capture the function feature value output by the functional algorithm model. After the functional algorithm model and the algorithm model to be verified are applied to the vehicle, the functional algorithm model can achieve the same or similar functions as the algorithm model to be verified. Therefore, by comparing the implementation results of the shadow task and the function task at the vehicle end, the method 100 according to the disclosure can evaluate and/or optimize the algorithm model to be verified.

In some embodiments, a shadow manager can be responsible for parsing the shadow file at the vehicle end and scheduling algorithm models in the shadow file. When the shadow task is distributed to the vehicle, the shadow file and the function file can operate simultaneously in the vehicle.

In step S 140, during the operation of the shadow file and the function file, the shadow filter can capture the shadow feature value output by the shadow file, and the function filter can capture the function feature value output by the functional algorithm model. If the cloud receives the shadow feature value uploaded as triggered by filter of the shadow filter, it can be known that the corresponding shadow filter rule is triggered by the algorithm model to be verified of a particular vehicle. At the same time, the function filter corresponding to the functional domain will also filter and trigger uploading of a corresponding function feature value.

In the operation of the real vehicle, the operation results output by the algorithm model to be verified does not affect the existing functional logic of the vehicle. In order to avoid the impact on the functional domain in which the vehicle was originally operating caused by the development error of the algorithm module to be verified, the method 100 according to the disclosure introduces a domain isolation mechanism. With this domain isolation mechanism, even if the shadow file and the function file are operating simultaneously in the vehicle, the operation process of the shadow file will not have any substantial impact on the operation of the function file.

In order to isolate the shadow file from the function file, after accepting the shadow task distributed from the cloud, the shadow manager updates the shadow file, and isolates, through a proxy, messages output by the shadow file. The proxy is responsible for isolating the input and output of the algorithm model to be verified at the vehicle end, to ensure that the function file does not receive output signals from the shadow file. In addition, with the scheduling and startup of the shadow manager, the shadow file can communicate, through the proxy, with other processes of a non-shadow file. In some embodiments, the shadow file can only receive messages forwarded by a gateway, while messages (e.g., shadow feature values) produced by the shadow file can only be broadcast through the gateway, and the naming of the messages is automatically changed during broadcasting. By using the above method, the problem of naming conflicts between the messages of the shadow file and the function file is solved, as well as the problem of compatibility of format versions of the messages of the shadow file and the function file. In other words, using the above scheme, the messages output by the shadow file and the messages output by the function file have different names, solving the problem of naming conflicts. In addition, the shadow file can also receive, through the gateway, the messages sent upstream of the function file and consume them correctly, solving the problem of compatibility of format versions of the messages of the shadow file and the function file.

In step S 150, the shadow feature value captured and uploaded as triggered by the shadow filter can be compared with the corresponding function feature value captured and uploaded as triggered by the function filter, and the algorithm model to be verified is evaluated and optimized at least based on a result of the comparison. In some embodiments, in step S 150, a verification result of the algorithm model to be verified can be obtained through statistics collection. In addition, by comparing the algorithm model to be verified triggering corresponding design functions with the functional domain algorithm model triggering corresponding design functions, it is possible to compare the changes in triggering of the functions by the models on the two versions of the model.

Optionally, in step S150, the cloud can also compare according to the relevant statistics and filter triggering results, evaluate whether the algorithm model to be verified is available, and optimize the algorithm model by reporting the captured data according to the corresponding filter rules, and regenerate a new shadow file for distributing. That is, if the algorithm model to be verified is optimized by the algorithm model optimization module, the optimized algorithm model to be verified can be repackaged into the shadow file for re-distributing to the matching vehicle, so that the optimized algorithm model to be verified can be iteratively optimized.

During the process of verifying and testing the algorithm model to be verified, the algorithm model to be verified can be iterated several times, and there is a corresponding iteration mechanism at the vehicle end. At the same time, an iterative version of the algorithm model to be verified can also be managed in the cloud. In some embodiments, during the subsequent update iterations of the algorithm model to be verified, a corresponding increment identifier of the shadow file is increased accordingly at each update, and changes are recorded in the cloud, where the cloud manages only the latest shadow file on the basis of the whole vehicle software version. In addition, when adapting to the changes of the whole vehicle software version, the shadow file needs to be re-uploaded and a file package needs to be recreated. Optionally, when the type of the shadow file at the vehicle end is changed or reset, the corresponding shadow filter rules also need to be updated or reset accordingly, and both the shadow filter rules and the shadow file can be based on the same whole vehicle software version as the iterative benchmark. Optionally, for the update iterations of the algorithm model to be verified, the shadow filter rules are updated as follows: a rule file is captured based on the feature of the shadow file, and a base increment identifier is generated, and during the subsequent rule updates, the corresponding increment identifier is increased at each update, and changes are recorded in the cloud, where the cloud manages only the latest rule configuration on the basis of the whole vehicle software version.

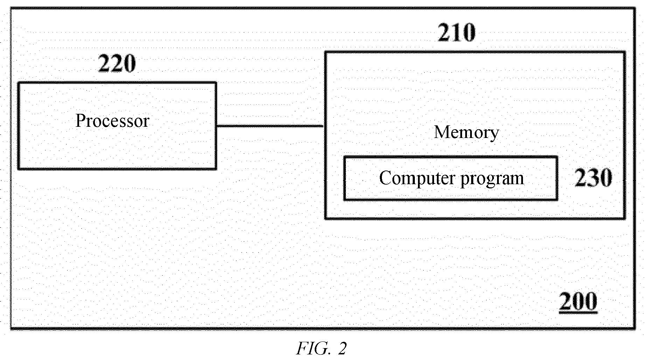

A computer system 200 according to one implementation of the disclosure will be described below in conjunction with FIG. 2.

FIG. 2 is a block diagram of a computer system 200 for optimizing an algorithm model to be verified according to one or more embodiments of the disclosure. As shown in FIG. 2, the computer system 200 includes a memory 210, a processor 220, and a computer program 230 stored on the memory 210 and executable on the processor 220. The processor 220 implements, when executing the computer program 230, the steps of the method 100 for optimizing an algorithm model to be verified as described above.

The method 100 and the system 200 according to the disclosure can establish a management system for the algorithm model to be verified in the cloud, to iteratively optimize, based on the same whole vehicle version and algorithm model name, the algorithm model to be verified. In order to achieve the above objective, the method 100 and the system 200 according to the disclosure are provided with a shadow filter corresponding to the algorithm model to be verified and the management system thereof. The shadow filter is responsible for collecting feature results correspondingly output by a type of algorithm model to be verified, and the management system supports the shadow filter to iterate based on the whole vehicle version and the corresponding filter rules of the algorithm model to be verified. In addition, the method 100 and the system 200 according to the disclosure design a distribution process for the iterated algorithm model to be verified, in order to distribute, based on an existing algorithm model to be tested at the vehicle end, the iterated algorithm model to be verified and the shadow filter to be updated, while the vehicle end updates the task based on the distribution. The disclosure further designs a manager for the algorithm model to be verified, the manager is configured to start and iteratively update the algorithm model to be verified, as well as to isolate communication between the algorithm model to be verified and a functional domain. With the technical features described above, the disclosure enables the cloud-based management and enabling of different versions of the shadow filter and the algorithm model to be verified, as well as the isolation of the results output by the algorithm model to be verified from the normal functional signals at the vehicle end.

The method 100 and the system 200 according to the disclosure place the algorithm model to be verified in a real vehicle driving environment, so that the functionality of the algorithm model to be verified can be visually observed and evaluated, and the safety, stability, and other indicators of the algorithm model to be verified can be credibly verified and optimized.

The method 100 and the system 200 according to the disclosure start, at the vehicle end by means of cloud distribution, the algorithm model to be verified, so that the algorithm model to be verified operates simultaneously with the existing functional algorithm model at the vehicle end. In the above scheme, the iterative version of the algorithm model to be verified can be managed in the cloud. In the operation of the real vehicle, the operation results output by the algorithm model to be tested is required not to affect the existing functional logic, while the method 100 and the system 200 according to the disclosure have a corresponding data collection mechanism, which is capable of capturing the feature results of the algorithm model to be verified onto the cloud. In addition, the vehicle end further has an iterative mechanism, allowing the algorithm model to be verified to be iteratively optimized several times based on the verification results.

In addition, the disclosure may alternatively be implemented as a computer storage medium, storing a program for causing a computer to perform the method for optimizing an algorithm model to be verified according to an aspect of the disclosure.

Here, various forms of computer storage media, such as disks (for example, a magnetic disk, an optical disc, etc.), cards (for example, a memory card, an optical card, etc.), semiconductor memories (for example, a ROM, a non-volatile memory, etc.), and tapes (for example, a magnetic tape, a cassette tape, etc.) may be used as the computer storage medium.

Various embodiments provided in the disclosure may be implemented by hardware, software, or a combination of hardware and software where applicable. In addition, without departing from the scope of the disclosure, various hardware components and/or software components described in this specification may be combined into a combined component including software, hardware, and/or both where applicable. Without departing from the scope of the disclosure, various hardware components and/or software components described in this specification may be separated into sub-components including software, hardware, or both where applicable. In addition, where applicable, it is contemplated that software components may be implemented as hardware components, and vice versa.

Software (such as program code and/or data) in the disclosure may be stored on one or more computer storage media. It is also contemplated that the software identified herein may be implemented using one or more general-purpose or special-purpose computers and/or computer systems, networked and/or otherwise. The steps described herein may be changed in order, combined into compound steps, and/or divided into sub-steps where applicable, to provide the features described herein.

The embodiments and examples proposed herein are provided to describe as adequately as possible embodiments according to the disclosure and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms. The disclosure can be implemented in many other forms without departing from its subject matter and scope. Therefore, the presented examples and implementations are deemed as illustrative rather than restrictive, and without departing from the spirit and scope of the disclosure defined by the appended claims, the disclosure may cover various modifications and substitutions.

## Claims

1. A method for optimizing an algorithm model to be verified, wherein the method comprises:
packaging the algorithm model to be verified into a shadow file;
generating a shadow filter corresponding to the shadow file, wherein the shadow filter is capable of capturing a shadow feature value output by the shadow file;
combining the shadow file and the shadow filter into a shadow task, and distributing the shadow task to a matching vehicle, wherein the vehicle is equipped with a function task, and the function task is formed by combining a function file and a corresponding function filter, wherein the function filter is capable of capturing a function feature value output by the function file;
during the operation of the shadow file and the function file, capturing, by the shadow filter, the shadow feature value output by the shadow file, and capturing, by the function filter, the function feature value output by the function file; and
comparing the captured shadow feature value and the corresponding function feature value, and evaluating and/or optimizing, at least based on a result of the comparison, the algorithm model to be verified.

2. The method according to claim 1, wherein the method further comprises:
if the algorithm model to be verified is optimized by the algorithm model optimization step, repackaging the optimized algorithm model to be verified into the shadow file for re-distributing to the matching vehicle, so that the optimized algorithm model to be verified can be iteratively optimized.

3. The method according to claim 1 or 2, wherein
during the operation of the shadow file and the function file, the shadow file is isolated from the function file, and communicates with processes in the vehicle other than the shadow file through a proxy.

4. The method according to claim 3, wherein
the shadow file communicates with other processes in the vehicle through the proxy in the following manner: the shadow file can only receive messages forwarded by a gateway, and the shadow feature value output by the shadow file can only be broadcast through the gateway.

5. The method according to any one of claims 1 to 4, wherein
the shadow filter captures, according to corresponding shadow filter rules, the shadow feature value output by the shadow file, wherein the shadow filter, the shadow filter rules, and the shadow file are named in a matching way, forming a constraint relationship among the shadow filter, the shadow filter rules and the shadow file.

6. A computer system for optimizing an algorithm model to be verified, wherein the computer system comprises:
a memory;
a processor; and
a computer program stored on the memory and executable on the processor, wherein the execution of the computer program causes the following steps to be performed:
packaging the algorithm model to be verified into a shadow file;
generating a shadow filter corresponding to the shadow file, wherein the shadow filter is capable of capturing a shadow feature value output by the shadow file;
combining the shadow file and the shadow filter into a shadow task, and distributing the shadow task to a matching vehicle, wherein the vehicle is equipped with a function task, and the function task is formed by combining a function file and a corresponding function filter, wherein the function filter is capable of capturing a function feature value output by the function file;
during the operation of the shadow file and the function file, capturing, by the shadow filter, the shadow feature value output by the shadow file, and capturing, by the function filter, the function feature value output by the function file; and
comparing the captured shadow feature value and the corresponding function feature value, and evaluating and/or optimizing, at least based on a result of the comparison, the algorithm model to be verified.

7. The computer system according to claim 6, wherein the execution of the computer program further causes the following step to be performed:
if the algorithm model to be verified is optimized by the algorithm model optimization step, repackaging the optimized algorithm model to be verified into the shadow file for re-distributing to the matching vehicle, so that the optimized algorithm model to be verified can be iteratively optimized.

8. The computer system according to claim 6 or 7, wherein
during the operation of the shadow file and the function file, the shadow file is isolated from the function file, and communicates with processes in the vehicle other than the shadow file through a proxy.

9. The computer system according to claim 8, wherein
the shadow file communicates with other processes in the vehicle through the proxy in the following manner: the shadow file can only receive messages forwarded by a gateway, and the shadow feature value output by the shadow file can only be broadcast through the gateway.

10. The computer system according to any one of claims 6 to 9, wherein
the shadow filter captures, according to corresponding shadow filter rules, the shadow feature value output by the shadow file, wherein the shadow filter, the shadow filter rules, and the shadow file are named in a matching way, forming a constraint relationship among the shadow filter, the shadow filter rules and the shadow file.

11. A computer storage medium comprising instructions, wherein the instructions, when executed, cause the method according to any one of claims 1 to 5 to be performed.
